# EUROPÄISCHE PATENTSCHRIFT

(11) **EP 3 838 595 B1**
(45) Veröffentlichungstag und Bekanntmachung des Hinweises auf die Patenterteilung: **26.04.2023**
(21) Anmeldenummer: 19217007.4
(22) Anmeldetag: 17.12.2019
(51) Int. Cl.: B41F 5/24, B41F 13/08, B41F 33/14, F16F 15/02

(54) **VERFAHREN ZUM BETREIBEN EINER ROTATIONSDRUCKMASCHINE**
METHOD OF OPERATING A ROTARY PRINTING MACHINE
PROCÉDÉ DE FONCTIONNEMENT D'UNE MACHINE D'IMPRESSION ROTATIVE

(43) Veröffentlichungstag der Anmeldung: 23.06.2021
(73) Patentinhaber: Heidelberger Druckmaschinen AG, 69115 Heidelberg (DE)
(72) Erfinder: Putzer, Marcus, 92714 Pleystein (DE); Schadl, Hans, 92242 Hirschau (DE)

(56) Entgegenhaltungen:
- EP-A1- 2 762 314
- EP-A2- 1 820 643

## Beschreibung

### Erfindung

Die Erfindung betrifft ein Verfahren mit den Merkmalen des Oberbegriffs von Anspruch 1.

### Technisches Gebiet

Die Erfindung liegt auf dem technischen Gebiet der grafischen Industrie und dort insbesondere im Bereich des Betreibens einer Rotationsdruckmaschine, bevorzugt für den Flexodruck. Im Besonderen liegt die Erfindung dabei auf dem Teilgebiet des Steuerns oder Regelns der Maschine bzw. deren Antrieben zum Vermeiden oder Reduzieren von Störungen

### Stand der Technik

Beim Betreiben von bahnverarbeitenden Rotationsdruckmaschinen können die Druckqualität verringernde Störungen auftreten, beispielsweise so genanntes "Bouncing" beim Flexodruck. Dieses wird z.B. durch Schwingungen von Druckzylindern hervorgerufen. Die Schwingungen wiederum können durch das Druckbild bzw. die Anordnung von druckenden und nichtdruckenden Stellen der Flexodruckformen hervorgerufen werden.

Eine bekannte aber nicht zufriedenstellende Maßnahme zum Vermeiden von "Bouncing" ist, das Druckbild durch zusätzliche - eigentlich nicht gewünschte - druckende oder nichtdruckende Stellen zu verändern. Eine weitere bekannte aber ebenfalls nicht zufriedenstellende - weil zu viel Makulatur erzeugende - Maßnahme ist, die Druckgeschwindigkeit zu ändern, da das "Bouncing" nur bei bestimmten Druckgeschwindigkeiten infolge von Resonanzen auftritt. Solche Änderungen nimmt üblicherweise ein Maschinenbediener vor.

Eine weitere bekannte aber ebenfalls nicht zufriedenstellende - weil teure Maßnahme - ist, Beschleunigungssensoren vorzusehen, welche die Schwingungen erfassen und automatisch eine Änderung der Druckgeschwindigkeiten zu bewirken. Die DE102005012915A1 offenbart ein Verfahren zum Betrieb einer Rotationsdruckmaschine mit rotierenden Bauteilen, wobei - störende Streifen auf der Bahn erzeugende - Schwingungen vermieden werden sollen. Es wird vorgeschlagen, einen Sensor am Zapfen des rotierenden Bauteils anzuordnen, welcher die Schwingungen erfasst. Die DE10107135A1 offenbart eine Rollendruckmaschine, z.B. eine Flexodruckmaschine, sowie ein Verfahren zur Schwingungsdämpfung. Es wird vorgeschlagen, eine Erfassungseinrichtung als Sensor an einem Lagerbock für einen Druckzylinder anzuordnen.

Die EP2762314A1 offenbart - als zu deren Anmeldezeitpunkt bekannten Stand der Technik - ein gattungsgemäßes Verfahren, d.h. ein Verfahren gemäß Oberbegriff von Anspruch 1; das Dokument selbst zielt jedoch in eine völlig andere Richtung, nämlich einen Rotationszylinder mit einem Aufbau mit verbesserten Dämpfungseigenschaften.

Die EP1820643A2 offenbart ein Verfahren zur Schwingungsreduktion eines Zylinders, wobei ein hydraulisch wirkender Aktor zum Einsatz kommen kann.

### Aufgabe

Es ist daher eine Aufgabe der vorliegenden Erfindung, eine Verbesserung gegenüber dem Stand der Technik zu schaffen, welche es insbesondere ermöglicht, kostengünstig und störungsfrei zu drucken.

### Erfindungsgemäße Lösung

Diese Aufgabe wird erfindungsgemäß durch ein Verfahren nach Anspruch 1 gelöst.

Vorteilhafte und daher bevorzugte Weiterbildungen der Erfindung ergeben sich aus den Unteransprüchen sowie aus der Beschreibung und den Zeichnungen.

Ein erfindungsgemäßes Verfahren zum Betreiben einer Rotationsdruckmaschine, wobei Störungen eines rotierenden Druckzylinders erfasst und durch Ändern der Druckgeschwindigkeit reduziert werden, zeichnet sich dadurch aus, dass die Störungen an einem Stellantrieb des Druckzylinders erfasst werden, wobei der Stellantrieb als ein Drehantrieb mit einem Elektromotor bereitgestellt wird.

Die Erfindung ermöglicht es in vorteilhafter Weise, kostengünstig und störungsfrei zu drucken. Erfindungsgemäß werden Störungen nicht an einem rein mechanischen Bauteil erfasst, z.B. am Druckzylinderzapfen oder an dessen Lagerbock, sondern an einem - bevorzugt elektrischen - Stellantrieb des Druckzylinders. Zusätzliche und teure Sensoren an rein mechanischen Bauteilen sind daher nicht erforderlich. Der Stellantrieb kann in vorteilhafter Weise bevorzugt als Sensor bzw. für das Erfassen von Störungen verwendet werden. Plierzu kann in vorteilhafter Weise bevorzugt auf eine elektrische Komponente des Stellantriebs zugegriffen werden, besonders bevorzugt auf einen Geber des Stellantriebs. Zusätzliche Sensoren brauchen nicht verbaut zu werden und entsprechende Kosten können vermieden werden.

### Weiterbildungen

Im Folgenden werden bevorzugte Weiterbildung der Erfindung (kurz: Weiterbildungen) beschrieben.

Eine Weiterbildung kann sich dadurch auszeichnen, dass die Störungen direkt an dem Stellantrieb des Druckzylinders erfasst werden, z.B. an diesem oder dessen Leitungen oder Kontakten abgegriffen werden.

Eine Weiterbildung kann sich dadurch auszeichnen, dass der Stellantrieb als ein Drehantrieb mit einem Servomotor bereitgestellt wird.

Eine Weiterbildung kann sich dadurch auszeichnen, dass die Störungen am Servomotor erfasst werden.

Eine Weiterbildung kann sich dadurch auszeichnen, dass die Störungen an einem Geber des Servomotors erfasst werden, z.B. an diesem oder dessen Leitungen oder Kontakten abgegriffen werden. Der Geber kann der Steuerung oder Regelung des Motors dienen.

Eine Weiterbildung kann sich dadurch auszeichnen, dass der Geber als ein Drehgeber bereitgestellt wird.

Eine Weiterbildung kann sich dadurch auszeichnen, dass der Geber als ein Drehwinkelgeber bereitgestellt wird.

Eine Weiterbildung kann sich dadurch auszeichnen, dass der Geber als ein Inkrementalgeber bereitgestellt wird.

Eine Weiterbildung kann sich dadurch auszeichnen, dass der Geber als ein Stromgeber bereitgestellt wird.

Eine Weiterbildung kann sich dadurch auszeichnen, dass der Geber als ein Encoder bereitgestellt wird, welcher Ausgangssignale bereitstellt.

Eine Weiterbildung kann sich dadurch auszeichnen, dass die Störungen über die Stromaufnahme des Servomotors erfasst werden, insbesondere über Veränderungen der Stromaufnahme.

Eine Weiterbildung kann sich dadurch auszeichnen, dass die Ausgangssignale des Encoders und/oder die Veränderungen der Stromaufnahme auf Schwingungen untersucht werden.

Eine Weiterbildung kann sich dadurch auszeichnen, dass das Untersuchen einen Vergleich zwischen einer Amplitude der Schwingungen und einer vorgegebenen Maximalamplitude umfasst.

Eine Weiterbildung kann sich dadurch auszeichnen, dass das Untersuchen rechentechnisch unter Verwendung eines Digitalrechners erfolgt. Der Digitalrechner kann mit dem Geber drahtgebunden oder drahtlos verbunden sein, z.B. über eine oder mehrere Signalleitungen oder über eine oder mehrere Datenleitungen.

Eine Weiterbildung kann sich dadurch auszeichnen, dass der Stellantrieb als Stellantrieb einer Einrichtung zur Positionsregelung für den Druckzylinder bereitgestellt wird.

Eine Weiterbildung kann sich dadurch auszeichnen, dass der Stellantrieb als Stellantrieb einer Einrichtung zur Regelung der Anpresskraft des Druckzylinders an einen Gegenzylinder bereitgestellt wird.

Eine Weiterbildung kann sich dadurch auszeichnen, dass die Einrichtung zur Positionsregelung während des Erfassens der Störungen aktiviert ist.

Eine Weiterbildung kann sich dadurch auszeichnen, dass der Stellantrieb wenigstens während des Erfassens der Störungen ungebremst ist, z.B. dadurch, dass eine Haltebremse am Stellantrieb gelöst ist.

Eine Weiterbildung kann sich dadurch auszeichnen, dass die Einrichtung zur Positionsregelung eine Spindel zum geradlinigen Verstellen der Position des Druckzylinders umfassend bereitgestellt wird, insbesondere zum Verstellen der Position relativ zu einem zugehörigen Gegendruckzylinder.

Eine Weiterbildung kann sich dadurch auszeichnen, dass die Einrichtung zur Positionsregelung eine Kugelgewindespindel umfassend bereitgestellt wird.

Eine Weiterbildung kann sich dadurch auszeichnen, dass die Einrichtung zur Positionsregelung auf einer Antriebsseite der Rotationsdruckmaschine bereitgestellt wird.

Eine Weiterbildung kann sich dadurch auszeichnen, dass die Einrichtung zur Positionsregelung auf einer Bedienseite der Rotationsdruckmaschine bereitgestellt wird.

Eine Weiterbildung kann sich dadurch auszeichnen, dass eine jeweilige Einrichtung zur Positionsregelung auf einer Antriebsseite und Bedienseite der Rotationsdruckmaschine bereitgestellt wird. Dabei kann das Erfassen der Störungen auf einer Seite (an einem Stellantrieb) oder auf beiden Seiten (an insgesamt zwei Stellantrieben) erfolgen.

Eine Weiterbildung kann sich dadurch auszeichnen, dass die Druckgeschwindigkeit geändert wird, bevorzugt durch Ändern der Drehzahl des Druckzylinders.

Eine Weiterbildung kann sich dadurch auszeichnen, dass die Bahntransportgeschwindigkeit geändert wird, bevorzugt durch Ändern der Drehzahl des Druckzylinders oder durch Ändern der Drehzahl von Bahnzugwalzen.

Eine Weiterbildung kann sich dadurch auszeichnen, dass weitere von der Druckgeschwindigkeit der Rotationsdruckmaschine abhängige Störungen wenigstens eines rotierenden weiteren Druckzylinders an einem Stellantrieb des Weiteren Druckzylinders erfasst werden und dass die Störungen und die weiteren Störungen durch Ändern der Druckgeschwindigkeit der Rotationsdruckmaschine reduziert werden.

Eine Weiterbildung kann sich dadurch auszeichnen, dass beide Störungen gemeinsam reduziert werden.

Eine Weiterbildung kann sich dadurch auszeichnen, dass die Druckgeschwindigkeit der Rotationsdruckmaschine verringert oder erhöht wird, bis beide Störungen unter einen vorgegebenen Störungs-Maximalwert reduziert sind.

Eine Weiterbildung kann sich dadurch auszeichnen, dass das Verringern oder Erhöhen der Druckgeschwindigkeit der Rotationsdruckmaschine schrittweise erfolgt.

Eine Weiterbildung kann sich dadurch auszeichnen, dass die Druckzylinder als Flexodruckzylinder bereitgestellt werden.

Eine Weiterbildung kann sich dadurch auszeichnen, dass an den Druckzylindern jeweils eine Rasterwalze angestellt ist.

Eine Weiterbildung kann sich dadurch auszeichnen, dass die Druckzylinder in einem jeweiligen Flexodruckwerk bereitgestellt werden.

Eine Weiterbildung kann sich dadurch auszeichnen, dass die Flexodruckwerke in einer bahnverarbeitenden Flexodruckmaschine bereitgestellt werden.

Dass die Störungen von der mechanischen Eigenfrequenz der Rotationsdruckmaschine oder deren Druckwerken oder deren Druckzylindern abhängig sind.

Eine Weiterbildung kann sich dadurch auszeichnen, dass die Störungen von der Druckgeschwindigkeit der Rotationsdruckmaschine abhängig sind.

Eine Weiterbildung kann sich dadurch auszeichnen, dass die Störungen von dem Druckbild einer auf dem Druckzylinder aufgenommenen Druckform abhängig sind.

Eine Weiterbildung kann sich dadurch auszeichnen, dass die Störungen Schwingungen des Druckzylinders hervorrufen.

Die Merkmale der Erfindung, der Weiterbildungen der Erfindung und der folgenden Ausführungsbeispiele zur Erfindung stellen auch in beliebiger Kombination miteinander vorteilhafte Weiterbildungen der Erfindung dar. Weiterbildungen der Erfindung können zudem die - im obigen Abschnitt "Technisches Gebiet der Erfindung" offenbarten - Einzelmerkmale oder Merkmalskombinationen aufweisen.

### Ausführungsbeispiele

Die Erfindung und eine oder mehrere der bevorzugten Weiterbildungen werden nachfolgend unter Bezug auf die Zeichnungen anhand eines bevorzugten Ausführungsbeispiels näher beschrieben. Einander entsprechende Merkmale sind in den Figuren mit denselben Bezugszeichen versehen.

Die Zeichnungen zeigen:
- Figur 1: Eine Maschine, ein erfindungsgemäßes Verfahren durchführend;
- Figur 2: Eine Einrichtung, ein erfindungsgemäßes Verfahren durchführend; und
- Figur 3: Ein erfindungsgemäßen Verfahren.

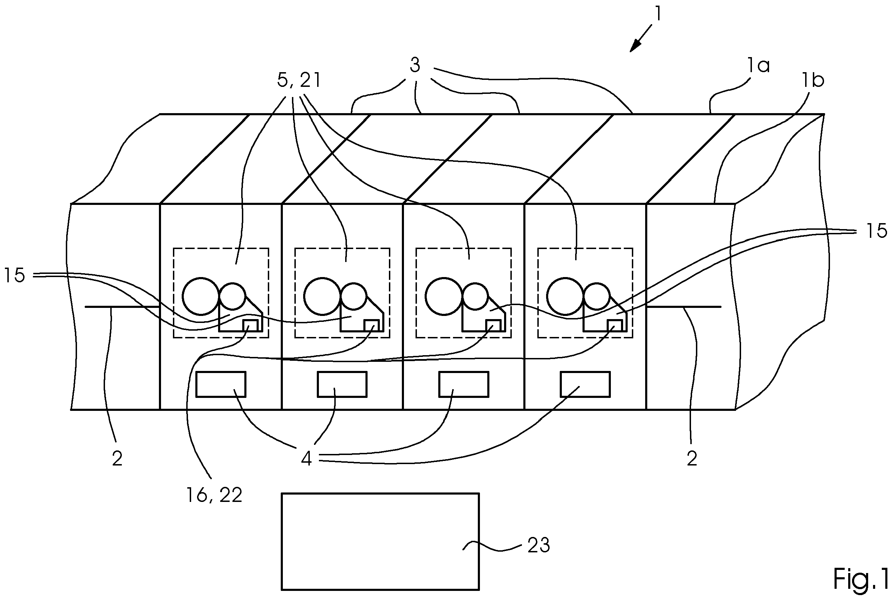

Figur 1 zeigt beispielhaft eine bahnverarbeitende Flexodruckmaschine 1 bei der Durchführung einer bevorzugten Ausführungsform des erfindungsgemäßen Verfahrens.

Die Maschine 1 ist in Reihenbauweise installiert und verfügt über zwei Längsseiten: eine Antriebsseite 1a und eine ihr gegenüberliegende Bedienseite 1b. Die Maschine verarbeitet bzw. bedruckt eine Bedruckstoffbahn 2, bevorzugt aus Papier, Karton, Pappe, Folie oder Verbundmaterial. Die Bahn kann mittels eines Rollenabwicklers bereitgestellt werden. Die Maschine umfasst mehrere, bevorzugt aufeinander folgende Druckwerke 3. Jedes Druckwerk umfasst wenigstens einen Motor 4 zum Antreiben des Druckwerks oder wenigstens eines Zylinders des Druckwerks während des Druckens. Die Bahn kann nach dem Bedrucken weiterverarbeitet, z.B. gestanzt werden

Die Maschine 1 umfasst mehrere Druckzylinder 5 und 21, im Besonderen Flexodruckzylinder, und zugehörige Gegendruckzylinder 6 und Rasterwalzen 7 (vgl. auch Figur 6). Auf jedem Druckzylinder ist eine Druckform 8 (ein so genanntes Klischee) mit einem Druckbild 9 aus druckenden und nichtdruckenden Stellen aufgenommen, im Besonderen eine Flexodruckplatte mit erhabenen, druckenden Stellen.

Bevorzugt umfasst jedes Druckwerk 3, wenigstens jedoch ein oder zwei Druckwerke, eine Einrichtung zur Regelung 15 mit einem jeweiligen Stellantrieb 16 oder 22.

Die Maschine 1 umfasst auch einen Digitalrechner 23. Verbindungen zum Signal- der Datenaustausch mit der Maschine oder deren Komponenten wie z.B. den Motoren 4 oder Stellantrieben 16 sind vorhanden, der Übersichtlichkeit wegen aber nicht dargestellt.

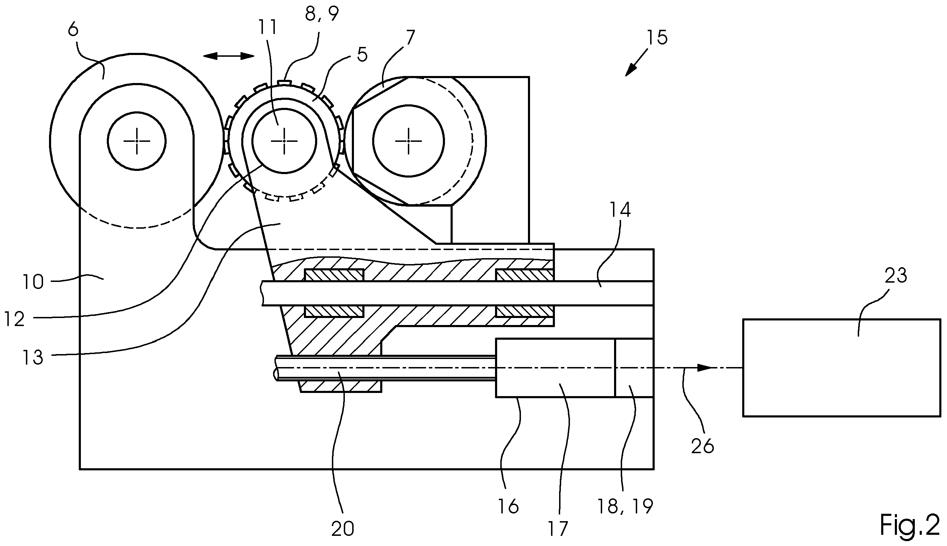

Figur 2 zeigt eine Einrichtung zur Regelung 15 bei der Durchführung einer bevorzugten Ausführungsform des erfindungsgemäßen Verfahrens.

Der Gegendruckzylinder 6 ist auf wenigstens einer Seite (Antriebsseite 1a bzw. AS oder Bedienseite 1b bzw. BS) in einem Gestell 10 der Maschine 1 aufgenommen; der Druckzylinder 5 mit seinem Zapfen 11 in einem Lager 12 eines Lagerbocks 13. Der Lagerbock ist relativ zum Gestell verschiebbar, bevorzugt horizontal. Hierzu ist eine Führung 14 vorhanden.

Es ist eine Einrichtung 15 zur Regelung auf AS und/oder BS vorhanden, bevorzugt zur Positionsregelung für den Druckzylinder 5 und/oder bevorzugt zur Regelung der Anpresskraft zwischen Druckzylinder 5 und Gegendruckzylinder 6. Die Einrichtung umfasst einen Stellantrieb 16, bevorzugt einen Elektromotor 17, besonders bevorzugt einen Servomotor 17, welcher einen Geber 18 umfasst. Der Geber 18 kann ein Encoder 19 sein oder einen Encoder 19 umfassen. An den Stellantrieb 16 ist eine Spindel 20, bevorzugt eine Kugelgewindespindel gekoppelt oder angebracht, welche im Zusammenwirken mit der Führung 14 die Drehbewegung des Stellmotors in eine Linearbewegung des Lagerbock 13 überführt.

Der Digitalrechner 23 ist mit dem Stellmotor 16 und insbesondere mit dessen Geber 18 und/oder Encoder 19 verbunden. Der Digitalrechner kann die Drehbewegungen des Stellmotors steuern oder regeln. Hierdurch kann die Position und/oder die Anpresskraft des Druckzylinders 5 an den Gegendruckzylinder 6 geregelt werden.

Erhebungen des Klischees 8 können während der Rotation des Druckzylinders 5 zu Störungen und insbesondere Schwingungen des Druckzylinders (so genanntes "Bouncing") und damit zu Störungen des Druckbildes führen. Solche Störungen können am Stellantrieb 16, am Elektromotor 17 oder am Geber 18 erfasst werden, da die Störungen/Schwingungen über den Lagerbock 13 und die Spindel 20 auf den Stellantrieb und dessen Komponenten übertragen werden bzw. rückwirken. Entsprechende (Strom- oder Spannungs-) Signale oder Daten können am Geber abgegriffen werden und an den Digitalrechner 23 übermittelt werden. Diese können im Digitalrechner ausgewertet werden. Dabei können die Störungen rechentechnisch erkannt und Maßnahmen zu deren Reduktion ergriffen werden. Beispielsweise kann der Digitalrechner den Motor 4 des zugehörigen Druckwerks 3 oder alle Motoren 4 aller Druckwerke derart ansteuern, dass die Störungen/Schwingungen reduziert oder kompensiert werden. Dabei kann insbesondere die Druckgeschwindigkeit verändert werden, z.B. erhöht oder verringert.

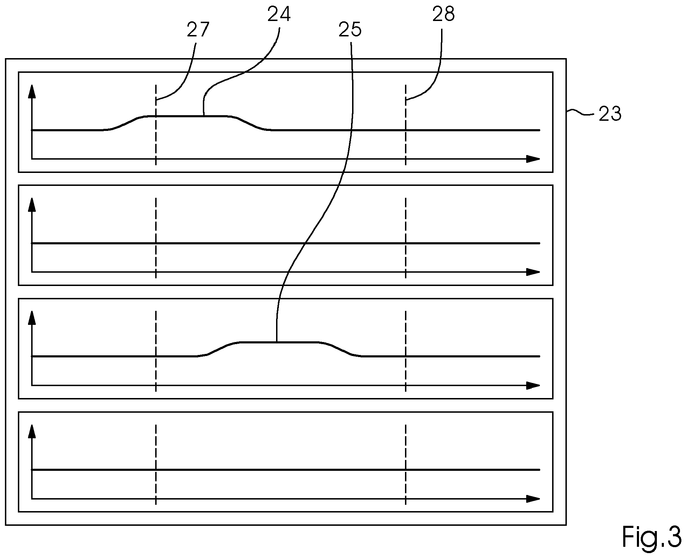

Figur 3 zeigt ausgewählte Schritte einer bevorzugten Ausführungsform des erfindungsgemäßen Verfahrens.

Dargestellt ist schematisch der Digitalrechner 23, der die beispielhaften vier Druckwerke überwacht und dabei die Störungen rechentechnisch untersucht oder analysiert und dabei kompensiert, reduziert oder verhindert. Für jedes Druckwerk (von oben nach unten: erstes bis viertes Druckwerk) ist ein Diagramm dargestellt, wobei jeweils die Amplitude einer Störung über der Druckgeschwindigkeit dargestellt ist.

Im gezeigten Beispiel kommt es druckgeschwindigkeitsabhängig an einem ersten Druckwerk zu einer Störungen 24 und an einem weiteren, z.B. dritten Druckwerk zu einer weiteren Störung 25. Diese Störungen werden vom Digitalrechner 23 bei den jeweiligen Druckgeschwindigkeiten erkannt. Das Erkennen kann durch einen Vergleich der Amplitude mit einem vorgegebenen Schwellwert erfolgen. Wird z.B. eine Störung bei einer ersten Druckgeschwindigkeit 27 erkannt, so kann die Druckgeschwindigkeit verändert werden, bis bei einer zweiten Druckgeschwindigkeit keine Störung vorliegt, weder am ersten Druckwerk noch an einem anderen. Bei dieser zweiten Druckgeschwindigkeit wird die Maschine 1 dann betrieben. Mit anderen Worten: die Druckgeschwindigkeit wird z.B. solange erhöht (oder verringert) bis an keinem Druckwerk Störungen vorliegen.

### Bezugszeichenliste

- 1: Rotationsdruckmaschine
- 1a: Antriebsseite/AS
- 1b: Bedienseite/BS
- 2: Bedruckstoffbahn
- 3: Druckwerke
- 4: Motoren
- 5: Druckzylinder
- 6: Gegendruckzylinder
- 7: Rasterwalze
- 8: Druckform/Klischee
- 9: Druckbild
- 10: Gestell
- 11: Zylinderzapfen
- 12: Lager
- 13: Lagerbock
- 14: Führung
- 15: Einrichtung zur Regelung
- 16: Stellantrieb
- 17: Elektromotor oder Servomotor
- 18: Geber
- 19: Encoder
- 20: Spindel
- 21: Weiterer Druckzylinder
- 22: Stellantrieb
- 23: Digitalrechner
- 24: Störungen
- 25: Weitere Störungen
- 26: Ausgangssignale
- 27: erste Druckgeschwindigkeit
- 28: zweite Druckgeschwindigkeit

## Patentansprüche

1. Verfahren zum Betreiben einer Rotationsdruckmaschine, wobei Störungen eines rotierenden Druckzylinders (5) erfasst und durch Ändern der Druckgeschwindigkeit reduziert werden,
**dadurch gekennzeichnet,**
**dass** die Störungen an einem Stellantrieb (16) des Druckzylinders (5) erfasst werden, wobei der Stellantrieb (16) als ein Drehantrieb mit einem Servomotor (17) bereitgestellt wird.

2. Verfahren nach Anspruch 1,
**dadurch gekennzeichnet,**
**dass** die Störungen an einem Geber (18) des Servomotors erfasst werden.

3. Verfahren nach Anspruch 2,
**dadurch gekennzeichnet,**
**dass** der Geber (18) als ein Encoder (19) bereitgestellt wird, welcher Ausgangssignale (26) bereitstellt.

4. Verfahren nach Anspruch 3,
**dadurch gekennzeichnet,**
**dass** die Ausgangssignale (26) des Encoders (19) auf Schwingungen (27) untersucht werden.

5. Verfahren nach einem der vorhergehenden Ansprüche,
**dadurch gekennzeichnet,**
**dass** der Stellantrieb (16) als Stellantrieb einer Einrichtung (15) zur Positionsregelung für den Druckzylinder (5) bereitgestellt wird.

6. Verfahren nach einem der vorhergehenden Ansprüche,
**dadurch gekennzeichnet,**
**dass** der Stellantrieb (16) als Stellantrieb einer Einrichtung (15) zur Regelung der Anpresskraft des Druckzylinders (5) an einen Gegenzylinder (6) bereitgestellt wird.

7. Verfahren nach einem der vorhergehenden Ansprüche,
**dadurch gekennzeichnet,**
**dass** weitere von der Druckgeschwindigkeit der Rotationsdruckmaschine (1) abhängige Störungen wenigstens eines rotierenden weiteren Druckzylinders (21) an einem Stellantrieb (22) des weiteren Druckzylinders erfasst werden und dass die Störungen und die weiteren Störungen durch Ändern der Druckgeschwindigkeit der Rotationsdruckmaschine (1) reduziert werden.

8. Verfahren nach Anspruch 7,
**dadurch gekennzeichnet,**
**dass** die Druckgeschwindigkeit der Rotationsdruckmaschine (1) verringert oder erhöht wird, bis beide Störungen unter einen vorgegebenen Störungs-Maximalwert reduziert sind.

9. Verfahren nach einem der vorhergehenden Ansprüche,
**dadurch gekennzeichnet,**
**dass** die Störungen von dem Druckbild (9) einer auf dem Druckzylinder (5) aufgenommenen Druckform (8) abhängig sind.

## Claims

1. Method for operating a rotary printing press wherein disturbances of a rotating printing cylinder (5) are detected and reduced by reducing the printing speed,
**characterized**
**in that** the disturbances (16) are detected at an actuating drive (16) of the printing cylinder (5), wherein the actuating drive (16) is provided as a rotary drive with a servomotor (17).

2. Method according to claim 1,
**characterized**
**in that** the disturbances are detected at a transducer (18) of the servomotor.

3. Method according to claim 2
**characterized**
**in that** the transducer (18) is provided as an encoder (19) which provides output signals (26).

4. Method according to claim 3,
**characterized**
**in that** the output signals (26) of the encoder (19) are examined for vibration (27).

5. Method according to any one of the preceding claims,
**characterized**
**in that** the actuating drive (16) is provided as an actuating drive of a device (15) for controlling the position of the printing cylinder (5).

6. Method according to any one of the preceding claims,
**characterized**
**in that** the actuating drive (16) is provided as an actuating drive of a device (15) for controlling the contact pressure between the printing cylinder (5) and an impression cylinder (6).

7. Method according to any one of the preceding claims,
**characterized**
**in that** further disturbances that are dependent on the printing speed of the rotary printing machine (1) are detected at an actuating drive (22) of at least one further rotating cylinder (21) and in that the disturbances and the further disturbances are reduced by changing the printing speed of the rotary printing machine (1).

8. Method according to claim 7,
**characterized**
**in that** the printing speed of the rotary printing machine (1) is decreased or increased until both disturbances are reduced to below a predefined maximum disturbance threshold.

9. Method according to any one of the preceding claims,
**characterized**
**in that** the disturbances are dependent on the print image (9) on a printing forme (8) received on the printing cylinder (5).

## Revendications

1. Procédé pour l'exploitation d'une machine à imprimer rotative, où des perturbations d'un cylindre d'impression rotatif (5) sont détectées et sont réduites par modification de la vitesse d'impression,
**caractérisé en ce**
**que** les perturbations sont détectées sur un servo-entraînement (16) du cylindre d'impression (5), le servo-entraînement (16) étant réalisé sous la forme d'un entraînement rotatif avec un servomoteur (17).

2. Procédé selon la revendication 1,
**caractérisé en ce**
**que** les perturbations sont enregistrées par un codeur (18) du servomoteur.

3. Procédé selon la revendication 2,
**caractérisé en ce**
**que** le codeur (18) est mis à disposition sous la forme d'un encodeur (19) qui met à disposition des signaux de sortie (26).

4. Procédé selon la revendication 3,
**caractérisé en ce**
**que** les signaux de sortie (26) de l'encodeur (19) sont contrôlés en ce qui concerne les oscillations (27).

5. Procédé selon l'une des revendications précédentes,
**caractérisé en ce**
**que** le servo-entraînement (16) est mis à disposition comme servo-entraînement d'un dispositif (15) de régulation de position pour le cylindre d'impression (5).

6. Procédé selon l'une des revendications précédentes,
**caractérisé en ce**
**que** le servo-entraînement (16) est mis à disposition comme servo-entraînement d'un dispositif (15) pour la régulation de la force de pression du cylindre 'impression (5) sur un contre-cylindre (6).

7. Procédé selon l'une des revendications précédentes,
**caractérisé en ce**
**que** d'autres perturbations dépendant de la vitesse d'impression de la machine à imprimer rotative (1) d'au moins un autre cylindre d'impression rotatif (21) sont détectées sur un servo-entraînement (22) de l'autre cylindre d'impression et **en ce que** les perturbations et les autres perturbations sont réduites par modification de la vitesse d'impression de la machine à imprimer rotative (1).

8. Procédé selon la revendication 7,
**caractérisé en ce**
**que** la vitesse d'impression de la machine à imprimer rotative (1) est réduite ou augmentée jusqu'à ce que les deux perturbations soient réduites en dessous d'une valeur maximale de perturbation prédéfinie.

9. Procédé selon l'une des revendications précédentes,
**caractérisé en ce**
**que** les perturbations sont fonction de l'image d'impression (9) d'une forme d'impression (8) saisie sur le cylindre d'impression (5).
